# EUROPÄISCHE PATENTSCHRIFT

(11) **EP 0 613 769 B1**
(45) Veröffentlichungstag und Bekanntmachung des Hinweises auf die Patenterteilung: **23.08.2000**
(21) Anmeldenummer: 94102523.1
(22) Anmeldetag: 19.02.1994
(51) Int. Cl.: B32B 17/10, H05B 3/86, B26F 3/06, B23K 26/00

(54) **Verfahren zur Herstellung einer heizbaren Verbundglasscheibe mit in der thermoplastischen Zwischenschicht angeordneten Metalldrähten**
Method for making a heatable laminated glass containing metallic wires in the interlayer
Procédé de fabrication de vitrage laminé chauffant, contenant des fils métalliques dans la couche intercallaire

(30) Priorität: 27.02.1993 DE 4306122; 21.05.1993 DE 4316964
(43) Veröffentlichungstag der Anmeldung: 07.09.1994
(73) Patentinhaber: SAINT-GOBAIN VITRAGE INTERNATIONAL S.A., 92400 Courbevoie (FR); SEKURIT SAINT GOBAIN Deutschland GmbH & Co. KG, 52066 Aachen (DE)
(72) Erfinder: Gillner, Manfred, D-52078 Aachen (DE); Mueller, Karl-Heinz, D-52076 Aachen (DE); Pikhard, Siegfried, D-52159 Roetgen (DE); Engels, Juergen, D-52223 Stolberg (DE); Sauer, Gerd, D-52224 Stolberg-Venwegen (DE); Reul, Bernhard, D-52062 Aachen (DE); Henn, Klaus, D-52072 Aachen (DE); Maeuser, Helmut, NL-6369 SJ Simpelveld (NL); Immerschitt, Stefan, Dr., D-52134 Herzogenrath (DE); Neumann, Dieter, D-52224 Stolberg (DE)
(74) Vertreter: Dederichs, August

(56) Entgegenhaltungen:
- EP-A- 0 140 112
- EP-A- 0 200 089
- EP-A- 0 547 692
- CH-A- 659 423
- FR-A- 958 703
- REVIEW OF SCIENTIFIC INSTRUMENTS Bd. 63, Nr. 6 , Juni 1992 , NEW YORK Seiten 3516 - 3518 XP301859 J. B. BERNSTEIN, S. S. COHEN, P. W. WYATT 'Metal wire cutting by repeated application of low-oower laser pulses'

## Beschreibung

Die Erfindung betrifft ein Verfahren zur Herstellung einer Verbundglasscheibe aus wenigstens zwei Einzelglasscheiben und mindestens einer diese miteinander verbindenden thermoplastischen Folie und mit einem oder mehreren Metalldrähten, wobei die Metalldrähte auf der Zwischenschicht abgelegt und fixiert werden und die mit den Drähten versehene Folie unter Anwendung von Wärme und Druck mit den Einzelglasscheiben verbunden wird.

Verbundglasscheiben mit in der thermoplastischen Zwischenschicht eingelegten Drähten werden bei Kraftfahrzeugen als elektrisch heizbare Glasscheiben und/oder als Antennenscheiben eingesetzt. Weitere Anwendungen dieser Gläser betreffen insbesondere den Baubereich, wo sie beispielsweise als heizbare Glasscheiben, als Alarmglasscheiben zum Schutz von Räumen gegen Ein- und Ausbruch sowie als Abschirmgläser zur Unterbindung des Durchtritts von elektromagnetischer Strahlung, oder auch zu Dekorzwecken eingesetzt werden.

Wenn die Metalldrähte als Heizdrähte dienen, sind in der Regel eine Reihe von Heizdrähten in Parallelschaltung mit entlang zweier gegenüberliegender Kanten der Glasscheibe angeordneten Sammelleitern verbunden.

Es ist bekannt (FR-A-958 703), Heizdrähte mittels spezieller Webstühle kontinuierlich nebeneinander auf mehrere aufeinander folgende dünne Folien für Verbundglasscheiben abzulegen. Nach dem bekannten Verfahren werden allerdings nur sehr kleine Heizfelder hergestellt, deren Sammelleiter weit vom Rand der jeweiligen Folie entfernt liegen. Beim Abschneiden der Heizdrähte an den Sammelleitern fallen große Verschnittlängen der Heizdrähte an.

Zum Ablegen und Fixieren der Drähte auf der thermoplastischen Folie sind verschiedene neuere Verfahren bekannt. Bei paralleler Anordnung der Drähte werden zunächst die Sammelleiter oder Sammelschienen in Form dünner Metallfolienbänder auf der auf ihre Endmaße geschnittenen thermoplastischen Folie fixiert. Sodann werden bei dem in der Praxis am meisten benutzten Verfahren die Drähte über die auf ihre Endmaße geschnittene thermoplastische Folie gespannt und durch Wärme und Druck auf der Folie fixiert. Anschließend werden die über die Folie überstehenden Drahtenden bündig mit der Folie abgeschnitten.

Bei Verbundglasscheiben, bei denen die Metalldrähte in dieser Weise aufgebracht worden sind, reichen die eingebetteten Drähte über die Sammelschienen hinaus bis zur Umfangsfläche der Verbundglasscheiben. Da auch nach dem Verbindeprozeß nicht immer eine fest haftende Verbindung zwischen der Oberfläche der Drähte und dem Material der thermoplastischen Folie erfolgt, können entlang den Drahtenden kleine Kanäle entstehen, die zur Umfangsfläche hin offen sind. Durch diese Kanäle kann im Laufe der Zeit Feuchtigkeit eindiffundieren, die beispielsweise Korrosionserscheinungen an den Sammelschienen und an den Kontaktstellen zwischen den Drähten und den Sammelschienen hervorrufen kann.

Es ist bei der Herstellung von Kondensatoren bekannt (EP-A-0 200 089), schmale metallfreie Streifen in auf Kunststofffolien aufgebrachten Metallschichten herzustellen, indem die Folie relativ zu einer Mehrzahl von gepulsten Laserstrahlen bewegt wird. Durch Energieeintrag erzeugt jeder Laserpuls metallfreie Flächen, die bei überlappender Aneinanderreihung einen schmalen, elektrisch isolierenden Streifen bilden können. Diese Druckschrift befaßt sich nicht mit dem vorstehend erörterten Problem beim Fertigen von Verbundglasscheiben mit eingebetteten Metalldrähten.

Es ist auch bei der Leiterplattenfertigung bekannt (EP-A-0 140 112), im Schaltbild nicht verwendbare Leiterbahnstege ohne Beschädigung mittels eines Kurzschlußstroms zu durchtrennen. Beidseits des zu durchtrennenden Stegs wird dazu je eine Elektrode angelegt und wird an das Elektrodenpaar eine elektrische Spannung angelegt. Auch diese Druckschrift befaßt sich nicht mit dem hier zu lösenden Problem.

Der Erfindung liegt die Aufgabe zugrunde, das eingangs genannte Verfahren dahingehend weiterzuentwickeln, daß störende, auf die Gegenwart der bis zur Umfangsfläche der Verbundglasscheibe reichenden Drahtenden zurückzuführende Effekte sicher vermieden werden.

Gemäß der Erfindung wird diese Aufgabe dadurch gelöst, daß nach Fixieren der über mindestens eine Kante der thermoplastischen Folie hinweg abgelegten und außerhalb der Folienfläche abgeschnittenen Drähte wenigstens ein Teil der Drähte zusätzlich innerhalb der Folienfläche durch lokale Beaufschlagung mit lediglich von dem Metall der Drähte absorbierter und letzteres ohne Beeinträchtigung der Folie erhitzender Energie lokal vollständig entfernt wird, so daß die thermoplastische Folie beim nachfolgenden Verbindeprozeß an den Trennstellen den gesamten Raum zwischen den beiden Glasscheiben ausfüllt.

Das Verfahren nach der Erfindung sieht also vor, die an der Umfangsfläche mündenden Drahtenden der auf der Folie fixierten Drähte im Abstand von der Umfangsfläche dadurch durchzutrennen, daß das Metall geschmolzen wird, ohne daß gleichzeitig die thermoplastische Folie in diesem Bereich unzulässig erwärmt wird. Während also der Draht selbst an dieser Stelle vollständig entfernt wird, bleibt das Volumen der thermoplastischen Folie an dieser Stelle voll erhalten. Beim nachfolgenden Verbindeprozeß füllt an dieser Stelle die thermoplastische Folie den gesamten Raum zwischen den beiden Glasscheiben aus, ohne daß Diffusionskanäle entstehen können oder erhalten bleiben. Damit wird die Gefahr einer Korrosionswirkung im Bereich der Drähte oder der Sammelschiene durch entlang kapillarer Hohlräume diffundierender Feuchtigkeit sicher vermieden.

Da auf die erfindungsgemäße Weise der Draht durchgetrennt werden kann, indem das Metall des Drahtes gewissermaßen verbrennt und/oder verdampft, ohne störende Rückstände zu hinterlassen, läßt sich das erfindungsgemäße Verfahren nicht nur in der Nähe des Scheibenrandes, sondern auch dann mit Erfolg anwenden, wenn ein Durchtrennen der Drähte innerhalb des Sichtfeldes der Glasscheibe vorgenommen werden soll.

Gegenüber mechanischen Trennmethoden, die man gegebenenfalls auch zum Durchtrennen der Drähte anwenden könnte, hat das erfindungsgemäße Verfahren auch den Vorteil, daß keine wesentlichen mechanischen Kräfte auf die Drähte ausgeübt werden, die zu einer Verschiebung der Drähte auf der Folie führen könnten.

Das erfindungsgemäße Verfahren läßt sich auch bei Antennenscheiben mit Vorteil anwenden. Bei Antennenscheiben mit einem in der thermoplastischen Zwischenschicht eingebetteten Antennendraht oder mit mehreren Antennendrähten kann es nämlich ebenfalls erforderlich oder zweckmäßig sein, den Antennendraht oder die Antennendrähte, die durch die Verlegemethode bedingt bis zur Umfangsfläche der Verbundglasscheibe reichen, im Abstand von der Umfangsfläche zu durchtrennen, um einen eventuellen direkten elektrischen Kontakt über die Klebermasse mit dem metallischen Fensterrahmen zu verhindern. Ebenso besteht in diesen Fällen ein Interesse daran, die elektrische Kapazität der Scheibenantenne auf einen gewünschten Wert zu begrenzen.

Gemäß einer ersten Ausführungsform des erfindungsgemäßen Verfahrens wird die zum lokalen Entfernen der Drähte erforderliche Energie in Form elektrischer Energie in den betreffenden Drahtabschnitt eingeleitet, indem eine elektrische Potentialdifferenz beiderseits der zu durchtrennenden Stelle angelegt wird. Das Durchtrennen der Drähte erfolgt auf diese Weise nach dem gleichen Prinzip, nach dem die bekannten elektrischen Schmelzsicherungen arbeiten. Da es sich bei dem Material der thermoplastischen Folie um elektrisch nichtleitende Materialien handelt, erfolgt kein direkter Stromdurchgang durch die Folie selbst, die sich infolgedessen auch nicht oder nur unwesentlich erhitzt.

Nach einer anderen Ausführungsform des erfindungsgemäßen Verfahrens wird die zum lokalen Entfernen der Drähte erforderliche Energie durch Beaufschlagung der Drähte mit Laserstrahlung einer Wellenlänge erreicht, die nur von dem Metall des Drahtes, nicht dagegen von dem Material der thermoplastischen Folie absorbiert wird.

In zweckmäßiger Weiterbildung der Erfindung kann gleichzeitig mit dem Trennvorgang oder unmittelbar im Anschluß daran über eine Kontaktierung der Drähte beiderseits der Trennstelle des Drahtes und eine Kontrollschaltung der elektrische Widerstand kontrolliert werden. Dabei wird also der Trennvorgang durch einen sich unmittelbar anschließenden Kontrollvorgang ergänzt. Dadurch wird es möglich, auf einfache Weise und ohne wesentlichen Zeit- und Arbeitsaufwand festzustellen, ob der Trennvorgang an allen Drähten zu der gewünschten Unterbrechung der Drähte geführt hat.

Die beiden Vorgänge "Trennen der Drähte" und "Kontrolle des Trennvorganges" können dabei vorteilhafterweise in einem gemeinsamen Verfahrensschritt durchgeführt werden. Auf diese Weise wird nicht nur die Wirtschaftlichkeit des Verfahrens erhöht, sondern es wird auch die Möglichkeit gegeben, durch den Kontrollvorgang den Trennvorgang so zu steuern, daß eine vollständige Trennung aller Metalldrähte an den durchzutrennenden Stellen mit Sicherheit stattfindet, indem bei Feststellung einer unvollständigen Trennung der Trennvorgang unmittelbar wiederholt wird.

Wenn das Durchtrennen der Drähte mit Hilfe elektrischer Energie durch Einleiten des elektrischen Stroms über zwei Elektroden erfolgt, wird zweckmäßigerweise der elektrische Widerstand unmittelbar über die den Trennvorgang bewirkenden Elektroden kontrolliert. Jedoch ist es selbstverständlich auch möglich, den Trennvorgang über Elektroden, die den Trennelektroden nachgeführt werden, zu kontrollieren.

Die Kontrolle des elektrischen Widerstandes kann auf verschiedene Weise über die Messung der elektrischen Potentialdifferenz zwischen den Elektroden oder über die Messung des zwischen diesen Elektroden fließenden Stroms jeweils beim Trennvorgang selbst erfolgen. Die elektrische Potentialdifferenz beziehungsweise die Stromstärke ändern sich nämlich während des Verlaufs des Trennvorgangs. Solange die den Trennvorgang durchführenden Elektroden noch keinen elektrischen Kontakt mit dem zu durchtrennenden Draht haben, liegt zwischen ihnen eine gegebene elektrische Potentialdifferenz an, die durch eine externe Spannungsquelle aufrechterhalten wird. Beim Kontakt der Elektroden mit dem zu durchtrennenden Draht fließt durch diesen Draht ein elektrischer Strom. Durch den elektrischen Strom sinkt die Spannung zwischen den Elektroden ab. Wenn der Draht durchgetrennt wird, wird der Strom unterbrochen und die Potentialdifferenz erreicht wieder ihren ursprünglichen (höheren) Wert. Durch den zeitlichen Verlauf der Stromstärke oder der elektrischen Potentialdifferenz kann festgestellt werden, ob der Draht durchgetrennt wurde oder nicht.

In zweckmäßiger Ausführung des erfindungsgemäßen Verfahrens kann beim Feststellen eines nicht unterbrochenen Drahtes dieser Draht als nicht getrennt markiert werden. Dies kann beispielsweise dadurch geschehen, daß beim Unterschreiten eines vorgegebenen Widerstandswertes an dieser Stelle eine Tintenstrahldüse betätigt wird, die diese Stelle markiert. Stattdessen oder auch zusätzlich hierzu kann beim Feststellen eines nicht unterbrochenen Drahtes durch die Kontrollvorrichtung ein optisches oder ein akustisches Signal gegeben oder ein entsprechendes Signal in einem Zähler gespeichert werden.

Die Erfindung wird nachfolgend anhand der Zeichnungen näher erläutert.

Von den Zeichnungen zeigt
- Fig. 1: eine für eine Heizscheibe vorgesehene mit Drähten und Sammelschienen belegte Folie in einer Gesamtansicht;
- Fig. 2: einen Ausschnitt aus Fig. 1 während des Durchtrennens der Drahtenden auf elektrischem Wege;
- Fig. 3: ein für das elektrische Durchtrennen geeignetes Werkzeug;
- Fig. 4: eine elektrische Schaltung für die Erzeugung des Trennstroms;
- Fig. 5: einen Ausschnitt aus Fig. 1 während des Durchtrennens mit Hilfe von Laserstrahlen, und
- Fig. 6: eine elektrische Schaltung für die Kontrolle des Trennvorgangs

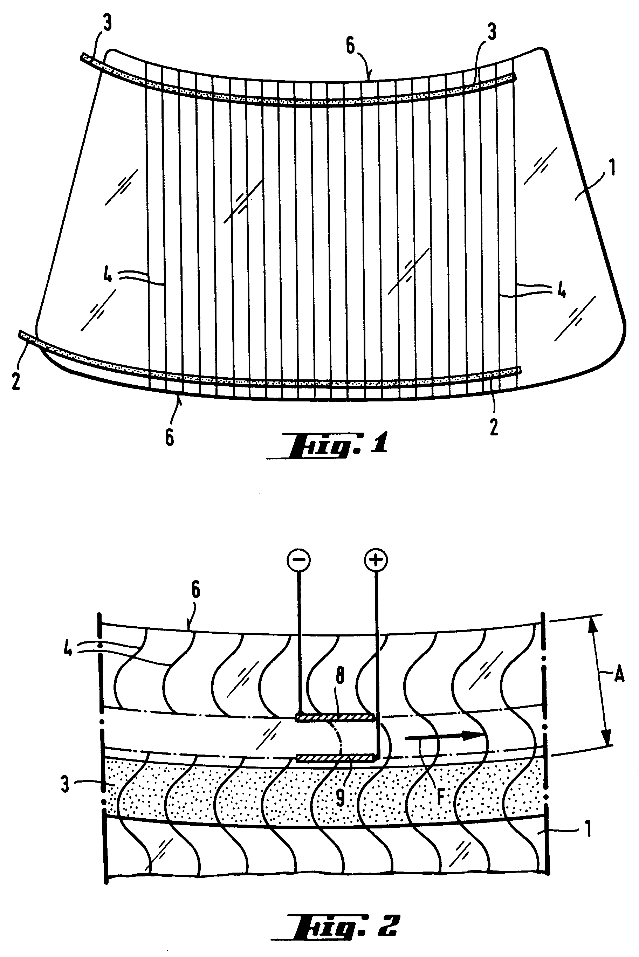

Die in Fig. 1 dargestellte, auf ihre Endabmessungen geschnittene, thermoplastische Folie 1 soll zu einer elektrisch beheizbaren Windschutzscheibe verarbeitet werden. Sie besteht aus dem üblichen Polyvinylbutyral. Auf dieser Folie 1 ist entlang des unteren Randes ein verzinntes Kupferfolienband 2 angebracht, und entlang des oberen Randes parallel zu diesem ein verzinntes Kupferfolienband 3. Diese Kupferfolienbänder 2, 3 dienen als Sammelschienen für die Heizleiter 4. Die Heizleiter 4 erstrecken sich quer über die gesamte Folienbreite, das heißt jeweils über die Sammelschienen hinaus bis zu den Schnittkanten 6 der Folie 1. Die Heizleiter 4 bestehen vorzugsweise aus dünnen Wolframdrähten mit einem Durchmesser von 20 bis 50 Mikrometern. Die Heizleiter 4 können in gerader oder in gewellter Form auf der Folie abgelegt und fixiert werden.

Der Abstand A zwischen der Schnittkante 6 der Folie 1 und dem die Sammelschiene bildenden Kupferfolienband 3 bzw. 2 beträgt in der Regel zwischen 0,5 und 2 cm. In diesem Bereich, vorzugsweise direkt nehen dem Kupferfolienband 3 bzw. 2 wird die erfindungsgemäße Durchtrennung der Drähte 4 vorgenommen, indem die Drähte 4 mit zwei an eine geeignete Spannungsquelle angeschlossenen Elektroden 8, 9 kontaktiert werden, wie es schematisch in der Fig. 2 dargestellt ist.

Bei dem genannten Wolframdraht hat sich hierfür eine Gleichspannung in der Größe von 10 bis 30 Volt bewährt. Dabei kann eine Strombegrenzung auf 3 bis 20 Ampère vorgesehen sein.

Die beiden Elektroden 8, 9, die beispielsweise die Form von Kufen aufweisen können, werden in Richtung des Pfeils F entlang des Kupferbandes 3 über die Folie geführt. Sobald beide Elektroden einen Draht 4 berühren, schmilzt oder verbrennt oder verdampft augenblicklich der zwischen den Elektroden liegende Drahtabschnitt, so daß der Draht sauber durchgetrennt wird.

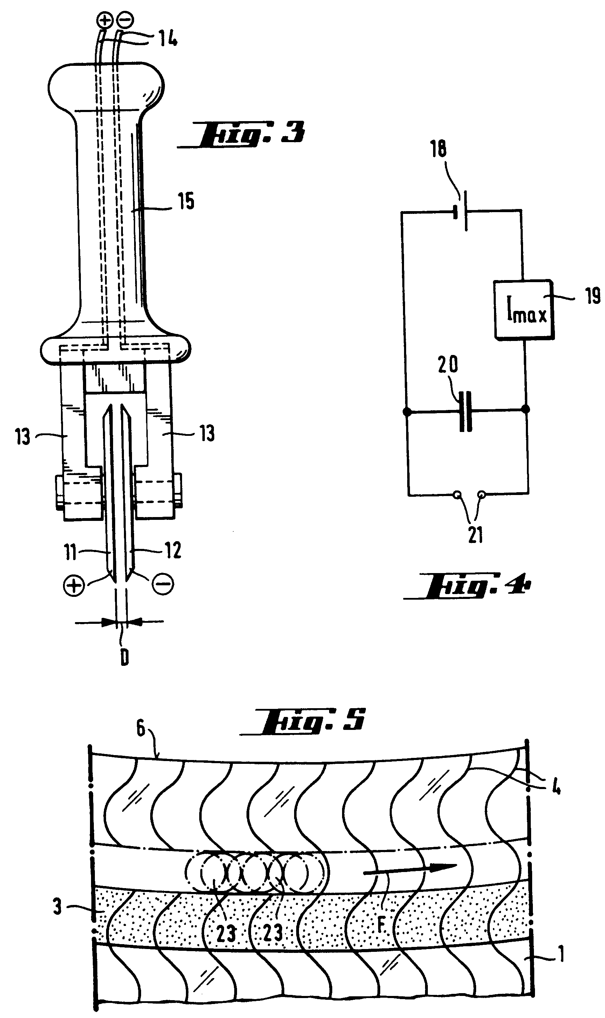

Zweckmäßigerweise können die Elektroden als rotierende Scheiben ausgebildet sein, die an einem gemeinsamen Halter angeordnet sind. Ein solches Werkzeug ist in Fig. 3 dargestellt. Es umfaßt die beiden kreisförmigen Scheiben 11, 12, die an der Halterung 13 drehbar gelagert sind. Die beiden Scheiben 11, 12 sind gegeneinander elektrisch isoliert und über ein Kabel 14 mit der Stromquelle verbunden. Der Abstand D zwischen den Scheiben 11, 12 beträgt beispielsweise 2 bis 3 mm. Das Werkzeug ist mit einem Griff 15 versehen, mit dem es von Hand oder mit Hilfe eines Roboters entlang des Kupferfolienbandes 3 über die Folie 1 geführt wird.

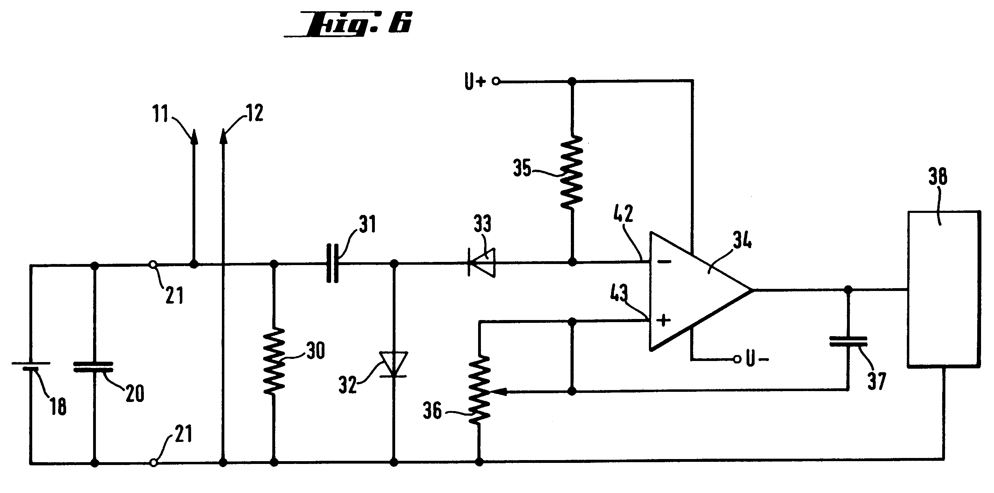

In Fig. 4 ist eine elektrische Schaltung dargestellt, die sich für die Erzeugung des erforderlichen Trennstroms bewährt hat. Sie umfaßt eine Gleichspannungsquelle 18 in der Größe von 10 bis 30 V, eine Strombegrenzungsschaltung 19 und einen Kondensator 20. Die Strombegrenzungsschaltung 19 ist für einen Wolframdraht von 20 bis 50 Mikrometern Durchmesser und einen Abstand der Trennelektroden von 1 bis 3 mm auf einen Wert von 3 bis 5 A eingestellt. Der Kondensator 20, der als Energiespeicher dient, hat eine Kapazität von mehr als 1000 µF. Die Trennelektroden bzw. das Kabel 15 des in Fig. 3 dargestellten Trennwerkzeugs werden an den Ausgang 21 der Stromerzeugungsschaltung angeschlossen.

Fig. 5 veranschaulicht ein Ausführungsbeispiel der Erfindung, bei dem die zur Trennung der Drähte 4 erforderliche Energie durch Beaufschlagung mit Laserstrahlung mit einer kleineren Wellenlänge als 2,5 Mikrometer zugeführt wird. Vorzugsweise wird ein Nd:YAG-Laser mit der Emissionswellenlänge 1,06 Mikrometer benutzt. Der Laserstrahl wird mit Hilfe einer geeigneten Vorrichtung, beispielsweise mit Hilfe eines CNC-gesteuerten Kreuzschlittens, außen an dem Kupferfolienband 3 in Richtung des Pfeiles F entlanggeführt, wobei die Bewegungsgeschwindigkeit des Lasers und dessen Leistung so aufeinander abgestimmt werden, daß die Metalldrähte 4 schmelzen, ohne daß die thermoplastische Folie 1 wesentlich erwärmt wird. Vorzugsweise wird ein gepulster Laser verwendet. In diesem Fall ist die Bewegungsgeschwindigkeit des Lasers derart in Abhängigkeit von der Pulsfrequenz zu wählen, daß sich die Schnittflächen 23 der Einzelimpulse wie in der Zeichnung dargestellt überlappen.

Der Laserstrahl kann außer zum Durchtrennen der Drähte 4 auch dazu benutzt werden, die elektrische Verbindung zwischen den Drähten 4 und den Sammelschienen sicherzustellen, indem der Laserstrahl teilweise auch über den verzinnten Folienstreifen 3 geführt wird und dabei das Zinn aufschmilzt, wodurch der Kontakt zu den Drähten verbessert wird. Zweckmäßigerweise wird in diesem Fall so vorgegangen, daß vor der Behandlung mit dem Laserstrahl zunächst ein weiteres verzinntes Kupferfolienband 3 aufgelegt wird. Durch die Erwärmung mit der Laserstrahlung verschmelzen dann die einander zugewandten Zinnschichten der beiden Kupferfolienbänder miteinander und schließen dabei die in dieser Ebene liegenden Drähte dicht ein.

In Fig. 6 ist eine elektrische Schaltung dargestellt, mit der gleichzeitig der Trennvorgang vorgenommen und während des Trennvorgangs der elektrische Widerstand über die Trennstelle des Drahtes kontrolliert wird. Die Schaltung enthält Widerstände 30, 35 und 36, Kondensatoren 31 und 37, Dioden 32 und 33, einen Operationsverstärker 34 und eine Markierungsvorrichtung 38. An den mit 11 und 12 gekennzeichneten Stellen ist die Schaltung mit zwei Elektroden, die über die zu kontrollierenden Drähte geführt werden, verbunden.

Die Schaltung wird an den Ausgängen 21 mit der für den Trennvorgang verwendeten, eine Stromquelle 18 und einen parallel dazu geschalteten Kondensator 20 umfassenden Stromerzeugungsschaltung verbunden. Parallel zur eigentlichen Detektionsschaltung ist ein Widerstand 30 geschaltet, dessen Widerstandswert klein genug ist, um einen ausreichend großen elektrischen Strom durch den Widerstand 30 zu ermöglichen, so daß auch bei kurzzeitigen Änderungen der anliegenden Spannung ein zu großer elektrischer Strom durch die elektronische Schaltung vermieden wird. Wenn die Elektroden 11, 12 keinen elektrischen Kontakt miteinander haben, dann liegt zwischen ihnen die maximale Spannung an, die durch die Stromerzeugungsschaltung 18, 20 gegeben ist. Solange die anliegende Spannung konstant ist, fließt durch den Kondensator 31 kein Strom. Sobald die Elektroden 11, 12 durch den zu kontrollierenden Draht miteinander verbunden werden, fällt die zwischen ihnen anliegende Spannung sprunghaft ab. Dadurch entlädt sich der Kondensator 31 über die Diode 33. Infolgedessen wird der Operationsverstärker 34 über seinen invertierenden Eingang 42 aktiviert. Das Ausgangssignal des Operationsvertärkers 34 betätigt die Markiervorrichtung 38, die so den nicht durchgetrennten Draht markiert. Über den Kondensator 37 und den Widerstand 36 wird das Ausgangssignal des Operationsverstärkers in dessen nichtinvertierenden Eingang 43 zurückgekoppelt. Bis der Kondensator 37 entladen ist, liegt daher ein verändertes elektrisches Potential am nichtinvertierenden Eingang 43 des Operationsverstärkers 34, so daß der Operationsverstärker 34 auch bei einer Änderung des Signals am invertierenden Eingang 42 während der Entladezeit des Kondensators 37 nicht aktiviert wird. Dadurch wird verhindert, daß möglicherweise nachfolgende Störimpulse als weitere nichtdurchgetrennte Drähte registriert werden.

## Patentansprüche

1. Verfahren zur Herstellung einer Verbundglasscheibe aus wenigstens zwei Einzelglasscheiben und mindestens einer diese miteinander verbindenden thermoplastischen Folie und mit einem oder mehreren Metalldrähten, wobei die Metalldrähte auf der thermoplastischen Folie abgelegt und fixiert werden und die mit den Drähten versehene Folie unter Anwendung von Wärme und Druck mit den Einzelglasscheiben verbunden wird,
**dadurch gekennzeichnet**, daß nach dem Fixieren der über mindestens eine Kante der thermoplastischen Folie hinweg abgelegten und außerhalb der Folienfläche abgeschnittenen Drähte wenigstens ein Teil der Drähte zusätzlich innerhalb der Folienfläche durch lokale Beaufschlagung mit lediglich von dem Metall der Drähte absorbierter und letzteres ohne Beeinträchtigung der Folie erhitzender Energie lokal vollständig entfernt wird, so daß die thermoplastische Folie beim nachfolgenden Verbindeprozeß an den Trennstellen den gesamten Raum zwischen den beiden Glasscheiben ausfüllt.

2. Verfahren nach Anspruch 1, **dadurch gekennzeichnet**, daß die zum lokalen Entfernen der Metalldrähte erforderliche Energie in Form elektrischer Energie zugeführt wird, indem eine elektrische Potentialdifferenz beiderseits der zu durchtrennenden Stelle der Drähte angelegt wird.

3. Verfahren nach Anspruch 2, **dadurch gekennzeichnet**, daß zwei an eine Stromquelle angeschlossene Elektroden entlang einer Trennlinie über die zu durchtrennenden Drähte geführt werden.

4. Verfahren nach Anspruch 3, **dadurch gekennzeichnet**, daß als Elektroden zwei leitfähige, durch einen gegenseitigen Abstand elektrisch isolierte kreisförmige, drehbar gelagerte Scheiben entlang der Trennlinie über die zu durchtrennenden Drähte geführt werden.

5. Verwendung einer elektrischen Schaltung zur Erzeugung der elektrischen Trennenergie für die Durchführung des Verfahrens nach einem der Ansprüche 2 bis 4, **gekennzeichnet durch** eine Gleichspannungsquelle (18), eine Strombegrenzungsschaltung (19) und einen als Energiespeicher dienenden Kondensator (20).

6. Verfahren nach Anspruch 1, **dadurch gekennzeichnet**, daß die zum lokalen Entfernen der Metalldrähte erforderliche Energie in Form von Laserstrahlung einer kleineren Wellenlänge als 2,5 Mikrometer zugeführt wird.

7. Verfahren nach Anspruch 6, **dadurch gekennzeichnet**, daß bei Verwendung eines gepulsten Lasers die Bewegungsgeschwindigkeit des Lasers derart in Abhängigkeit von der Pulsfrequenz gewählt wird, daß sich die Schnittflächen der durch die Einzelimpulse bestrahlten Bereiche überlappen.

8. Verfahren nach Anspruch 6 oder 7, **dadurch gekennzeichnet**, daß beim Durchtrennen von Metalldrähten entlang von aus verzinnten Metallfolienbändern bestehenden Sammelschienen die Laserstrahlung teilweise über die Sammelschienen geführt wird derart, daß gleichzeitig durch Aufschmelzen des Zinns der Kontakt zwischen den Metallfolienbändern und den Drähten verbessert wird.

9. Verfahren nach einem oder mehreren der Ansprüche 1 bis 5, **dadurch gekennzeichnet**, daß gleichzeitig mit dem Trennvorgang oder unmittelbar im Anschluß daran über eine Kontaktierung der Drähte beiderseits der Trennstelle des Drahtes und eine Kontrollschaltung der elektrische Widerstand kontrolliert wird.

10. Verfahren nach Anspruch 9, **dadurch gekennzeichnet**, daß der elektrische Widerstand unmittelbar über die den Trennvorgang bewirkenden Elektroden kontrolliert wird.

11. Verfahren nach Anspruch 9 oder 10, **dadurch gekennzeichnet**, daß beim Unterschreiten eines vorgegebenen Widerstandswertes an der zu trennenden Stelle der Draht als nicht getrennt markiert wird.

12. Verfahren nach Anspruch 9, 10 oder 11, **dadurch gekennzeichnet**, daß beim Unterschreiten eines vorgegebenen Widerstandswertes an der zu trennenden Stelle ein optisches oder akustisches Signal ausgelöst wird.

13. Verfahren nach einem oder mehreren der Ansprüche 9 bis 12, **dadurch gekennzeichnet**, daß beim Unterschreiten eines vorgegebenen Widerstandswertes das dabei gewonnene Signal von einem Zähler gespeichert wird.

14. Verwendung einer einen parallel zu Kontaktelektroden (11,12) geschalteten Widerstand (30) und einen Operationsverstärker (34) mit zwei Eingängen (42,43) aufweisenden elektronischen Schaltung, bei der der eine Eingang (42) des Operationsverstärkers (34) von den Elektroden (11,12) über einen Sperrkondensator (31), und der andere Eingang (43) von dem Ausgangssignal des Operationsverstärkers (34) über einen Kondensator (37) und einen Widerstand (36) angesteuert werden, und das Ausgangssignal des Operationsverstärkers (34) zur Ansteuerung einer Speicher- oder Markiervorrichtung (38) dient, für die Durchführung des Verfahrens nach einem der Ansprüche 9 bis 13.

## Claims

1. Method for the manufacture of a laminated glass plate from at least two single glass plates and at least one thermoplastic film connecting them together and with one or more metal wires, the metal wires being placed and fixed on the thermoplastic film and the film provided with the wires is joined to the single glass plates accompanied by the application of heat and pressure, characterized in that following the fixing of the wires placed over and beyond at least one edge of the thermoplastic film and cut off outside the film surface at least part of the wires is additionally locally completely removed within the film surface by local application of energy absorbed solely by the metal of the wires and heating the latter without impairing the film, so that during the following joining process the thermoplastic film at the separation points fills the entire space between the two glass plates.

2. Method according to claim 1, characterized in that the energy necessary for the local removal of the metal wires is supplied in the form of electrical energy, in that an electrical potential difference is applied on either side of the point of the wires to be separated.

3. Method according to claim 2, characterized in that two electrodes connected to a power supply are guided along a separating line over the wires to be separated.

4. Method according to claim 3, characterized in that as electrodes are guided along the separating line over the wires to be separated two conductive, circular, rotatably mounted disks electrically isolated by a mutual spacing.

5. Use of an electric circuit for producing the electrical separating energy for performing the method according to one of the claims 2 to 4, characterized by a direct current source (18), a current limiting circuit (19) and a capacitor (20) serving as an energy storage device.

6. Method according to claim 1, characterized in that the energy necessary for the local removal of the metal wires is supplied in the form of laser radiation of a lower wavelength than 2.5 micrometers.

7. Method according to claim 6, characterized in that when using a pulsed laser, the laser movement speed is so selected as a function of the pulse frequency that the cut surfaces of the areas irradiated by the single pulses overlap.

8. Method according to claim 6 or 7, characterized in that on separating the metal wires along busbars comprising tin-coated metal foil strips, the laser radiation is partly guided over the busbars in such a way that simultaneously by melting tin contact is improved between the metal foil strips and the wires.

9. Method according to one or more of the claims 1 to 5, characterized in that simultaneously with the separating process or directly following onto the latter, by contacting the wires on either side of the wire separating point and a check circuit, the electrical resistance is checked.

10. Method according to claim 9, characterized in that the electrical resistance is directly checked by means of the electrodes bringing about the separating process.

11. Method according to claim 9 or 10, characterized in that on dropping below a predetermined resistance value the wire is marked as unseparated at the point to be separated.

12. Method according to claim 9, 10 or 11, characterized in that on dropping below a predetermined resistance value at the point to be separated an optical or acoustic signal is emitted.

13. Method according to one or more of the claims 9 to 12, characterized in that on dropping below a predetermined resistance value, the signal obtained is stored by a counter.

14. Use of an electronic circuit having a resistor (13) connected in parallel to contact electrodes (11, 12) and an operational amplifier (34) with two inputs (42, 43), in which one input (42) of the operational amplifier (34) is controlled by the electrodes (11, 12) by means of a blocking capacitor (31) and the other input (43) by the output signal of the operational amplifier (34) by means of a capacitor (37) and a resistor (36), and that the output signal of the operational amplifier (34) is used for controlling a storing or marking device (38), for performing the method according to one of the claims 9 to 13.

## Revendications

1. Procédé de fabrication d'un vitrage feuilleté constitué d'au moins deux feuilles de verre individuelles et d'au moins une pellicule thermoplastique reliant ces deux feuilles de verre l'une à l'autre et comprenant un ou plusieurs fils métalliques, les fils métalliques étant déposés et fixés sur la pellicule thermoplastique et la pellicule pourvue des fils étant assemblée avec les feuilles de verre individuelles par application de chaleur et de pression, caractérisé en ce que, après la fixation des fils dépassant d'au moins un bord de la pellicule thermoplastique et sectionnés en dehors de la surface de la pellicule, au moins une partie des fils aussi à l'intérieur de la surface de la pellicule est tout à fait éliminée localement par un apport local d'énergie absorbée uniquement par le métal des fils et chauffant cette partie sans altérer la pellicule, de telle sorte que, lors du processus d'assemblage qui s'ensuit, la pellicule thermoplastique remplisse, au niveau des points de séparation, tout l'espace séparant les deux feuilles de verre.

2. Procédé selon la revendication 1, caractérisé en ce que l'énergie nécessaire à l'élimination locale des fils métalliques est fournie sous forme d'énergie électrique, une différence de potentiel électrique étant appliquée de part et d'autre du point de séparation des fils.

3. Procédé selon la revendication 2, caractérisé en ce que deux électrodes raccordées à une source de courant sont guidées au-dessus des fils à séparer le long d'une ligne de séparation.

4. Procédé selon la revendication 3, caractérisé en ce que deux disques circulaires conducteurs de l'électricité, montés avec possibilité de rotation et isolés électriquement l'un de l'autre par un écart les séparant sont guidés en tant qu'électrodes au-dessus des fils à séparer le long de la ligne de séparation.

5. Utilisation d'un circuit électrique pour la production de l'énergie électrique de séparation destinée à la mise en oeuvre du procédé selon les revendications 2 à 4, caractérisée par une source de tension continue (18), un élément de limitation de courant (19) et un condensateur (20) servant d'accumulateur d'énergie.

6. Procédé selon la revendication 1, caractérisé en ce que l'énergie nécessaire pour l'élimination locale des fils métalliques est fournie sous forme de rayons laser d'une longueur d'onde inférieure à 2,5 micromètres.

7. Procédé selon la revendication 6, caractérisé en ce que lors de l'utilisation d'un laser en régime pulsé, la vitesse de déplacement du laser est choisie en fonction de la fréquence de répétition des impulsions, de telle sorte que les surfaces de coupe chevauchent les zones irradiées par les impulsions individuelles.

8. Procédé selon la revendication 6 ou 7, caractérisé en ce que lors de la séparation des fils métalliques le long de barrettes collectrices composées de bandes de feuillards métalliques étamées, les rayons laser sont guidés en partie au-dessus sur les barrettes collectrices, de telle sorte que, simultanément, par fusion de l'étain, le contact entre les bandes de feuillards métalliques et les fils soit amélioré.

9. Procédé selon l'une ou plusieurs des revendications 1 à 5, caractérisé en ce que au moment du processus de séparation ou directement à la suite de celui-ci, la résistance électrique est contrôlée par une mise en contact des fils de part et d'autre du point de séparation du fil et par une mise en circuit de contrôle.

10. Procédé selon la revendication 9, caractérisé en ce que la résistance électrique est contrôlée directement par les électrodes entraînant le processus de séparation.

11. Procédé selon la revendication 9 ou 10, caractérisé en ce que lors du dépassement d'une valeur de résistance prédéterminée au point de séparation, le fil est marqué comme étant non séparé.

12. Procédé selon la revendication 9, 10 ou 11, caractérisé en ce que lors du dépassement d'une valeur de résistance prédéterminée au point de séparation, un signal optique ou acoustique est déclenché.

13. Procédé selon une plusieurs des revendications 9 à 12, caractérisé en ce que lors du dépassement d'une valeur de résistance prédéterminée, le signal extrait est enregistré par un compteur.

14. Utilisation d'un circuit électronique présentant une résistance (30) mise en parallèle avec les électrodes de contact (11, 12) et un amplificateur opérationnel (34) à deux entrées (42, 43), dans le cadre de laquelle une entrée (42) de l'amplificateur opérationnel (34) est commandée par les électrodes (11, 12) via un condensateur de blocage (31) et l'autre entrée (43) est commandée par le signal de sortie de l'amplificateur opérationnel (34) via un condensateur (37) et une résistance (36), le signal de sortie de l'amplificateur opérationnel (34) servant à commander un dispositif d'enregistrement et de marquage (38) destiné à la mise en oeuvre du procédé selon l'une quelconque des revendications 9 à 13.
